(19) Europäisches Patentamt
European Patent Office
Office européen des brevets

(11) **EP 1 253 659 A1**

(12) **EUROPEAN PATENT APPLICATION**
published in accordance with Art. 158(3) EPC

(43) Date of publication:
**30.10.2002 Bulletin 2002/44**

(51) Int Cl.7: **H01M 8/02**

(21) Application number: **00993907.5**

(22) Date of filing: **23.10.2000**

(86) International application number:
**PCT/JP00/07363**

(87) International publication number:
**WO 02/035631 (02.05.2002 Gazette 2002/18)**

(84) Designated Contracting States:
**AT BE CH CY DE DK ES FI FR GB GR IE IT LI LU MC NL PT SE**

(71) Applicant: **NIPPON PILLAR PACKING CO., LTD.**
**Osaka-shi, Osaka 532-0022 (JP)**

(72) Inventors:
• **OTAWA, Kazuhiko**
**Nippon Pillar Packing Co., Ltd.**
**Osaka-shi, Osaka 532-0022 (JP)**

• **YOSHIDA, Tsunemori**
**Nippon Pillar Packing Co., Ltd.**
**Sanda-shi, Hyogo 669-1333 (JP)**
• **SUGITA, Katsunori**
**Nippon Pillar Packing Co., Ltd.**
**Sanda-shi, Hyogo 669-1333 (JP)**

(74) Representative: **Fleuchaus, Leo, Dipl.-Ing. et al**
**Fleuchaus & Gallo,**
**Melchiorstrasse 42**
**81479 München (DE)**

(54) **FUEL CELL SEPARATOR**

(57)     According to the invention, in a separator molded member (4A) for a fuel cell which is produced by: loading a complex compound that is configured by bonding graphite powder by means of a thermosetting resin, into a mold (14); and forming ribs (11) for forming gas passages by the resin molding process, a section of the separator molded member is formed into a stack structure in which part of flat graphite particles (14) overlap with one another in the thickness direction, whereby the gas impermeability, the mechanical strength, and the conductivity which are required in a fuel cell separator can be improved.

Fig. 5.

**Description**

Technical Field

The present invention relates to a fuel cell separator which is mainly used as a cell for an electric vehicle, and more particularly to a fuel cell separator of the solid polymer electrolyte type or the phosphoric acid type which is used for: sandwiching a gas diffusion electrode having a sandwich structure wherein an electrolyte membrane configured by an ion exchange membrane is interposed between an anode and a cathode from both the outer sides; and forming fuel gas passages, oxidant gas passages, and coolant water passages between the anode and the cathode, thereby constituting a unit cell that is a unit of the fuel cell.

Background Art

In a fuel cell, a fuel gas containing hydrogen is supplied to an anode, and an oxidant gas containing oxygen is supplied to a cathode, so that, in the anode and the cathode, electrochemical reactions indicated by the formulae:

$$H_2 \rightarrow 2H^- + 2e^- \tag{1}$$

$$(1/2)O_2 + 2H^- + 2e^- \rightarrow H_2O \tag{2}$$

occur, and, in the whole of the cell, an electrochemical reaction indicated by the formula:

$$H_2 + (1/2)O_2 \rightarrow H_2O \tag{3}$$

proceeds. The chemical energy of the fuel is directly converted into an electrical energy, with the result that the cell can exert predetermined cell performance.

In a fuel cell separator of the solid polymer electrolyte type or the phosphoric acid type in which such energy conversion is conducted, conventionally, it is usual to use an electrically conductive resin. An electrically conductive resin is a complex which is configured by bonding graphite (carbon) powder by means of a thermosetting resin such as phenol resin, or a so-called bondcarbon (resin-bonded carbon) compound. A fuel cell separator is produced by loading the bondcarbon compound into a mold, and resin-molding into a predetermined shape in which ribs for forming fuel gas passages, oxidant gas passages, or coolant water passages are formed integrally on at least one face of a separator molded member.

A fuel cell separator which is resin-molded into a predetermined shape by using such a bondcarbon compound is requested to have the following performances: (1) the internal resistance which is the sum of the specific resistance of the separator molded member, and the contact resistance of the top surfaces of ribs for forming passages and functioning as a contact surface with an electrode is low and the electrical conductivity is satisfactory; (2) mechanical strength against compression, bending, and the like is not insufficient; and (3) penetration leakage in which a gas or the like leaks from passages, due to formation of a gap between the graphite powder does not occur or seldom occurs.

In a conventional fuel cell separator which is simply resin-molded by using a bondcarbon compound, however, graphite powder (graphite particles) is only randomly dispersed and oriented in a thermosetting resin matrix. Therefore, contact portions among graphite particles are few, so that an electrical conductivity corresponding to the performance required in a separator cannot be obtained. Moreover, bonding among graphite particles depends only on the thermosetting resin matrix. When the amount of a resin which is electrically insulative is reduced as far as possible in order to improve the conductivity, the resin surrounding graphite particles is insufficient, with the result that graphite particles are insufficiently bonded to one another, thereby causing a problem in that mechanical strength against compression, bending, and the like is remarkably lowered. When the amount of the resin is reduced, there arises another problem in that a gap is formed between graphite particles and penetration leakage often occurs. As a result, above-mentioned performances (1) to (3) which are required in a fuel cell separator cannot be sufficiently satisfied.

Disclosure of Invention

The present invention has been conducted in view of the above-mentioned circumstances. It is an object of the invention to provide a fuel cell separator in which overlapping portions are ensured among graphite particles, whereby improvement of the conductivity can be attained together with that of mechanical strength, and penetration leakage can be eliminated or caused to seldom occur.

The fuel cell separator according to the invention is a fuel cell separator which consists of a complex that is configured by bonding graphite powder by means of a thermosetting resin, and in which ribs for forming fuel gas passages, oxidant gas passages, or coolant water passages are formed on at least one face by a resin molding method, and characterized in that a section of a separator molded member is formed so that plural flat graphite particles constitute a stack structure in a thickness direction.

According to the invention having the characteristic configuration, since plural flat graphite particles constitute a stack structure in the thickness direction of a section, overlapping portions of conductive graphite particles are ensured, so that the conductivity required in a separator molded member can be improved. Furthermore, the formation of the stack structure in which graphite particles overlap with one another enhances the compressive strength of the ribs which receive a strong fastening force when stacked, so that the mechanical strength, particularly, the flexural strength of the whole of the separator molded member can be ensured to a high level. As a result, even in the case of a reduced composition ratio of an electrically insulative thermosetting resin which is disadvantageous to the conductivity, it is possible to sufficiently ensure a mechanical strength which is required in a separator molded member. Therefore, thinning of a separator which is very effective in reduction in size and weight of a fuel cell can be attained.

In addition, since flat graphite particles overlap with one another, gaps are hardly produced between graphite particles, and hence penetration leakage in which a gas or the like leaks from passages can be eliminated or caused to seldom occur.

As described above, because of the formation of the stack structure in which plural flat graphite particles overlap with one another in the thickness direction of the separator molded member, it is possible to attain an effect that above-mentioned performances (1) to (3) which are required in a fuel cell separator can be surely and sufficiently satisfied.

In the fuel cell separator of the invention, particularly, graphite particles each of which is covered by a resin may be used as the plural graphite particles, so that the graphite particles can be easily flattened under a low molding pressure, and it is possible to obtain a stack structure in which the flat graphite particles are bound to one another to be compactly arranged in a direction perpendicular to the application direction of the molding pressure. Moreover, internal stress due to difference in heat shrinkage in an interface between the thermosetting resin and graphite particles is dispersed and relaxed by the covering resin so as to effectively suppress cracks and breakages from occurring in graphite particles themselves. By the synergistic action of the bonding of graphite particles and the excellent gas impermeability of each graphite particle, penetration leakage can be surely prevented from occurring, and the performance of the separator can be further improved.

In the fuel cell separator of the invention, particularly, part of the flat graphite particles constituting the stack structure may be exposed from top surfaces of the ribs, whereby the contact area with an electrode is enlarged, and the adaptability between the contact face of an electrode and the top surfaces of the ribs (the contact surface with an electrode) can be improved, so that the contact resistance can be remarkably lowered and the conductivity of the whole of the separator can be further improved.

In the fuel cell separator of the invention, the composition ratio of the thermosetting resin which is one of the compositions of the complex, and which largely affects the conductivity and the gas permeability may be set to a range of 8 to 24 wt.%, whereby the gas impermeability is ensured to surely prevent penetration leakage from occurring, and at the same time the specific resistance is lowered to improve the conductivity. When the composition ratio of the thermosetting resin is smaller than 8 wt.%, the gas impermeability is so low that penetration leakage easily occurs, and, when the composition ratio is larger than 24 wt.%, the specific resistance is so high that the conductivity which is required in a separator of this kind cannot be ensured.

In the fuel cell separator of the invention, the average particle diameter of the graphite powder which is the other composition of the complex, and which largely affects the moldability, the conductivity, and the strength may be set to a range of 15 to 200 μm, preferably, 40 to 125 μm, whereby the elongation and fluidity of the complex serving as a molding material can be enhanced to improve the moldability. Furthermore, the specific resistance can be lowered to improve the conductivity and enhance the performance and efficiency of a fuel cell, while ensuring mechanical strength that is sufficient for preventing the separator from suffering a damage such as a breakage due to vibrations or the like. When the average particle diameter of the graphite powder is smaller than 15 μm, the specific resistance is so high that the conductivity which is required in a separator of this kind cannot be ensured, and, when the average particle diameter is larger than 200 μm, the fluidity during a resin molding process is poor to impair the moldability, and the mechanical strength is so low that, when the separator is used in a fuel cell, a damage such as a breakage easily occurs.

As the thermosetting resin which is useful in the invention, phenol resin which is excellent in wettability with respect to graphite powder may be most preferably used. Alternatively, any other resin such as polycarbodiimide resin, epoxy resin, furfuryl alcohol resin, urea resin, melamine resin, unsaturated polyester resin, or alkyd resin may be used as far as the resin causes a thermosetting reaction when the resin is heated, and is stable against the operating temperature of the fuel cell and components of the supplied gasses.

As the graphite powder which is useful in the invention, powder of graphite of any kind, including natural graphite, artificial graphite, carbon black, kish graphite, and expanded graphite may be used. In consideration of conditions such as the cost, the kind can be arbitrarily selected. In the case where expanded graphite is used, particularly, a layer structure is formed by expanding the volume of the graphite as a result of heating. When the molding pressure is applied, layers can twine together to be firmly bonded to one another. Therefore, expanded graphite is effective in a complex in which the ratio of a thermosetting resin is to be reduced.

Brief Description of Drawings

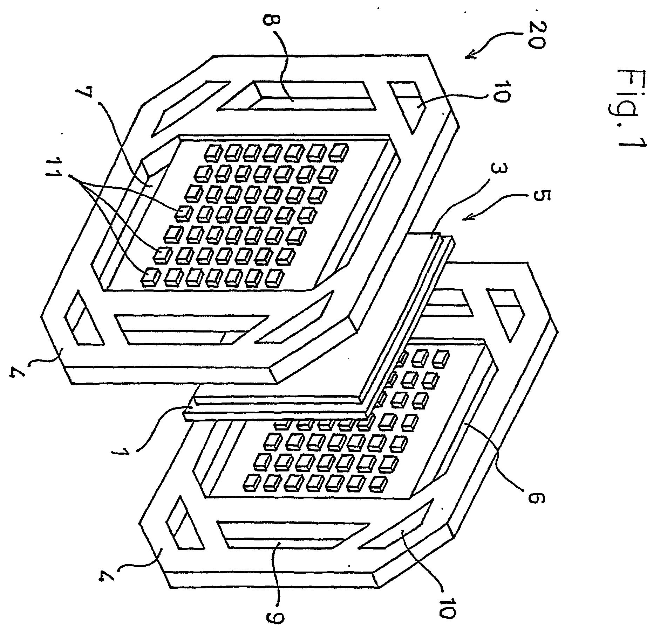

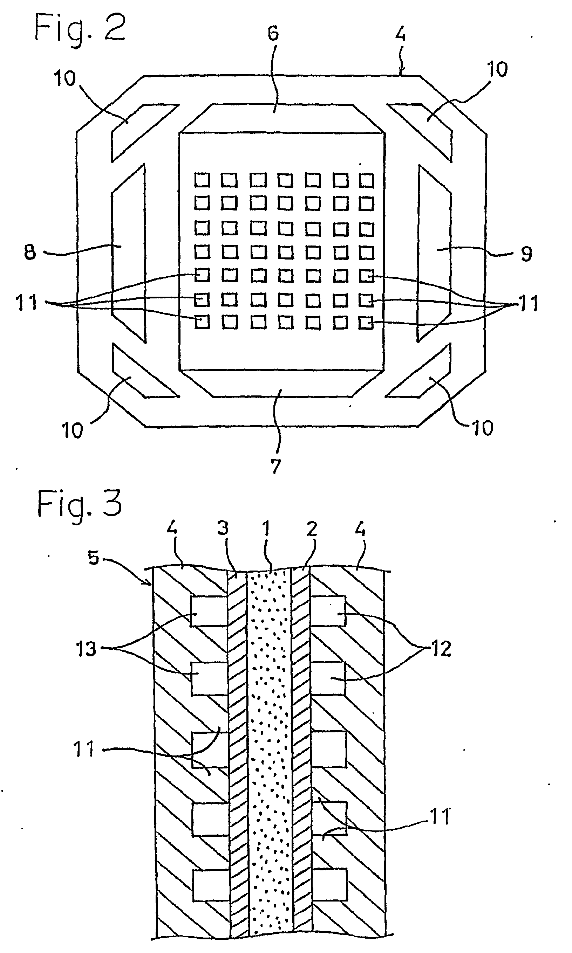

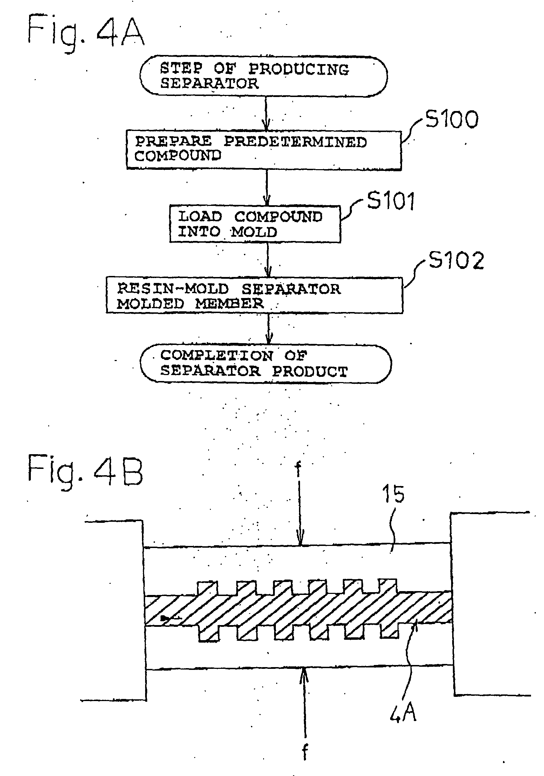

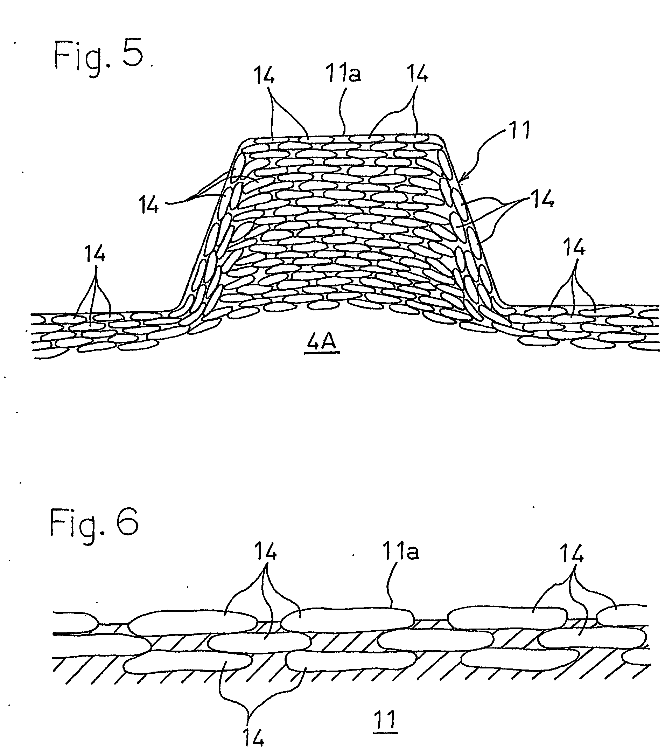

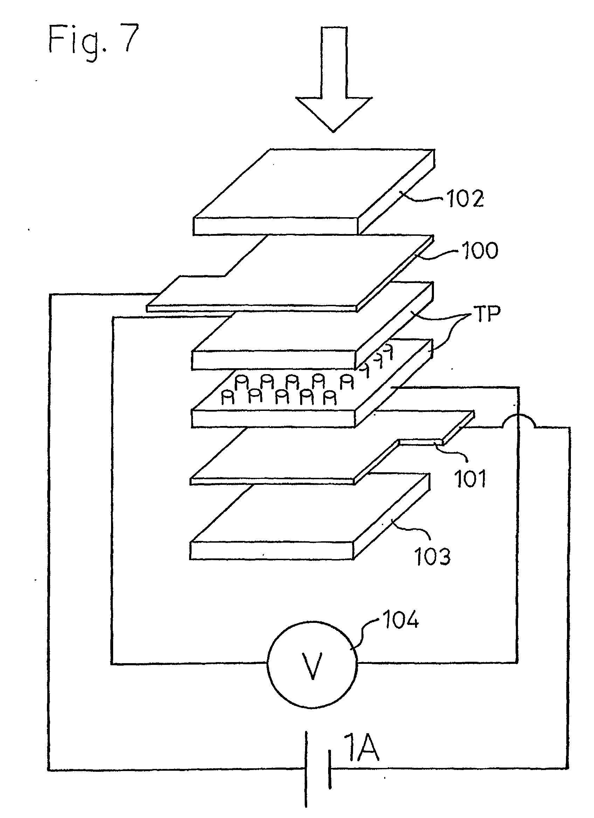

Fig. 1 is an exploded perspective view showing the configuration of a stack structure constituting a solid polymer electrolyte type fuel cell which has the fuel cell separator of the invention; Fig. 2 is an external front view of the separator in the solid polymer electrolyte type fuel cell; Fig. 3 is an enlarged section view of main portions and showing the configuration of a unit cell which is a unit constituting the solid polymer electrolyte type fuel cell; Fig. 4A is a chart illustrating steps of producing the fuel cell separator of the invention; Fig. 4B is a view illustrating the manner of the production; Fig. 5 is an enlarged section view of main portions diagrammatically showing a state including ribs in the fuel cell separator of the invention; Fig. 6 is an enlarged section view of main portions diagrammatically showing the surface condition of ribs in the separator; and Fig. 7 is a view illustrating a manner of measuring an electric resistance.

Best Mode for Carrying Out the Invention

Hereinafter, an embodiment will be described. Fig. 1 shows the configuration of a stack structure constituting a solid polymer electrolyte type fuel cell which has the separator of the invention.

The solid polymer electrolyte type fuel cell 20 has a stack structure wherein plural unit cells 5 each of which is configured by: an electrolyte membrane 1 that is an ion exchange membrane made of, for example, a fluororesin; an anode 2 and a cathode 3 that are formed by carbon cloth woven of carbon filaments, carbon paper, or carbon felt, and that sandwich the electrolyte membrane 1 from both the sides to constitute a gas diffusion electrode having a sandwich structure; and separators 4, 4 that sandwich the sandwich structure from both the sides are stacked, and collector plates that are not shown are respectively placed on both the ends.

In each of the separators 4, as clearly shown in Fig. 2, fuel gas holes 6 and 7 containing hydrogen, oxidant gas holes 8 and 9 containing oxygen, and a coolant water hole 10 are formed in the peripheral area. When plural unit cells 5 are stacked, the holes 6, 7, 8, 9, and 10 of each separator 4 pass through the interior of the fuel cell 20 in the longitudinal direction to form a fuel gas supply manifold, a fuel gas discharge manifold, an oxidant gas supply manifold, an oxidant gas discharge manifold, and a coolant water passage, respectively.

Ribs 11 having a dimple-like shape are integrally formed on the surfaces of the separators 4. As shown in Fig. 3, fuel gas passages 12 are formed between the ribs 11 and the surface of the anode 2, and oxidant gas passages 13 are formed between the ribs 11 and the surface of the cathode 3.

In the solid polymer electrolyte type fuel cell 20 configured as described above, the fuel gas which is supplied from an externally disposed fuel gas supplying device to the fuel cell 20, and which contains hydrogen is then supplied into the fuel gas passages 12 of each unit cell 5 via the fuel gas supply manifold to cause the electrochemical reaction indicated by formula (1) above, on the side of the anode 2 of the unit cell 5. After the reaction, the fuel gas is discharged to the outside from the fuel gas passages 12 of the unit cell 5 via the fuel gas discharge manifold. At the same time, the oxidant gas (air) which is supplied from an externally disposed oxidant gas supplying device to the fuel cell 20, and which contains oxygen is supplied into the oxidant gas passages 13 of each unit cell 5 via the oxidant gas supply manifold to cause the electrochemical reaction indicated by formula (2) above, on the side of the cathode 3 of the unit cell 5. After the reaction, the oxidant gas is discharged to the outside from the oxidant gas passages 13 of the unit cell 5 via the oxidant gas discharge manifold.

In accordance with the electrochemical reactions of formulae (1) and (2) above, in the whole of the fuel cell 20, the electrochemical reaction indicated by the formula (3) above proceeds, so that the chemical energy of the fuel is directly converted into an electrical energy, with the result that the cell can exert predetermined performance. Because of the characteristics of the electrolyte membrane 1, the fuel cell 20 is operated in a temperature range of about 80 to 100°C, and hence involves heat generation. During operation of the fuel cell 20, therefore, coolant water is supplied from an externally disposed coolant water supplying device to the fuel cell 20, and the coolant water is circulated through the coolant water passage, thereby preventing the temperature of the interior of the fuel cell 20 from being raised.

A method of producing the separator 4 in the solid polymer electrolyte type fuel cell 20 which is configured and operates as described above will be described with reference to Figs. 4A and 4B. The separator 4 is molded by using a complex (bondcarbon) in which the composition ratios are set to 76 to 92 wt.%, preferably, 70 to 87 wt.% of graphite powder having an average particle diameter of 15 to 200 μm, preferably, 40 to 125 μm, and 8 to 24 wt.%, preferably, 10 to 20 wt.% of a thermosetting resin. The graphite powder and the thermosetting resin are uniformly mixed with each other and adjusted to produce a predetermined compound (step S100).

As the graphite powder which is one of the materials of the bondcarbon, used are graphite particles in which graphite powder is covered by phenol resin by: mixing and dispersing graphite powder into a phenol resin solution that is diluted with an organic solvent of low viscosity, such as acetone, alcohol, or ether; stirring and kneading the solution to become slurry; and then granulating and drying the slurry by a spray dryer, or graphite particles configured by an aggregate of graphite powder and phenol resin, the aggregate being produced by: charging graphite powder into phenols, formaldehydes, a reaction catalyst, and a phenol resin reaction solution; and reacting the phenols with the formaldehydes in the presence of the graphite powder to cause a phenol resin which is produced in accordance with the reaction, to be adsorbed between graphite powder.

The compound is then loaded into a mold 15 having a predetermined molding shape including recesses for forming the ribs 11 (step S101). Under this state, the mold 15 is heated to 150 to 200°C to elevate the temperature, and a pressing machine which is not shown is operated to apply a molding pressure of 15 MPa or higher, preferably, 18 MPa or higher in the directions of the arrows f in Fig. 4B, whereby a separator molded member 4A of a predetermined shape having the ribs 11 is resin-molded in accordance with the shape of the mold 15 (step S102).

The separator molded member 4A which has received the above-mentioned molding pressure to be resin-molded is formed so as to constitute a stack structure in which, as shown in Fig. 5, all graphite particles 14 ... of the whole molded member including the ribs 11 are flattened and bound to one another so that the flat graphite particles 14 ... are compactly arranged in a direction perpendicular to the application direction of the molding pressure, and, in the thickness direction of a section of the separator molded member 4A, part of the flattened graphite particles 14 ... overlap with one another. As shown in Fig. 6, part of the flat graphite particles 14 ... which are positioned in the end portions of the ribs 11 are exposed from the top surfaces of the ribs 11 to form contact surfaces 11a with an electrode.

In the thus produced separator 4 for a fuel cell, the graphite particles 14 ... are flattened by the molding pressure to form the stack structure in which part of the flat graphite particles 14 ... overlap with one another, and hence overlapping contact portions among the conductive graphite particles 14 are ensured over the whole area in the thickness direction, so that the conductivity required in the separator 4 can be improved.

Furthermore, the stack structure enhances the compressive strength of the ribs which receive a strong fastening force when stacked, so that the mechanical strength, particularly, the flexural strength of the whole of the separator molded member 4A can be ensured to a high level. As a result, it is possible to sufficiently ensure a mechanical strength which is required in the separator 4, while the composition ratio of the electrically insulative thermosetting resin which is disadvantageous to the conductivity is reduced so as to thin the separator 4.

In addition, since the flat graphite particles 14 ... overlap with one another, gaps are scarcely formed between the graphite particles 14 ..., and penetration leakage in which a gas or the like leaks from passages can be caused to seldom occur.

When resin-covered graphite particles, or minute granular graphite particles configured by an aggregate of graphite powder and phenol resin are used, particularly, the synergistic action of: the enabling of the formation of a stack structure wherein the flattened graphite particles 14 ... are compactly arranged in a direction perpendicular to the application direction of the molding pressure, by flattening the graphite particles 14 ... under a low molding pressure, and binding the flattened graphite particles 14 ... to one another; and the enabling of the elimination of reduction of the gas impermeability due to cracks, breakages, or the like in graphite particles 14 themselves, by dispersing and relaxing internal stress due to difference in heat shrinkage in the interface between the thermosetting resin and the graphite particles 14 ... by the covering resin or the resin between the graphite particles 14 ... can surely prevent penetration leakage from occurring, to further improve the performance of the separator.

The flat graphite particles 14 ... are exposed from the top surfaces 11a of the ribs 11 functioning as a contact surface with an electrode, whereby the contact area with an electrode can be enlarged, and the adaptability between the contact face of an electrode and the top surfaces 11a of the ribs (the contact surface with an electrode) can be improved, so that the contact resistance can be remarkably lowered. This lowering cooperates with the reduction of the specific resistance to enable the conductivity of the whole of the separator to be further improved.

Hereinafter, the invention will be described in more detail by way of an example.

<Example>

A test piece having ribs was produced by: loading a bondcarbon compound which was prepared at the composition ratios of 85 wt.% of natural graphite powder particles that were granulated at an average particle diameter of 100 μm by covering graphite powder by phenol resin, and 15 wt.% of phenol resin, into a mold; and conducting a heat treatment for 2 minutes while applying a molding pressure of 15 MPa at a molding temperature of 165°C.

<Comparative Example>

As a resin component, a powdery phenol resin material is used. The material is pulverized and mixed by a ball mill or an automatic mortar, magnesium stearate is added during the pulverizing process, the material is further pulverized and mixed, and methanol (solvent) is added to the material to make the material slurry. At a blending ratio of 15 wt.%, powder of natural graphite is added to the slurry phenol resin, and the mixture is stirred, dried at 60°C, and then pulverized by a mixer. The thus prepared bondcarbon compound was loaded into a mold, and a test piece having ribs was produced by a resin molding method under the same conditions as described above.

Contents of tests and results;

With respect to each of the test pieces of above-mentioned Example and Comparative Example, the gas permeability (unit: cc·cm/cm$^2$·s·atm), the flexural strength (unit: MPa), the compressive strength (unit: MPa), and the electric resistance {specific resistance (unit: mΩ·cm$^2$) + contact resistance (unit: mΩ·cm$^2$)} were measured, and, on the basis of the measured values, the penetration leakage property, the mechanical strength, and the electrical conductivity as a separator were evaluated.

The conditions of the measurements are as follows. In the measurement of the gas permeability, 5 test pieces of 20 mm square and having 100 ribs in which depth $\times$ diameter is $0.5 \times 1.25$ (mm) were used in accordance with method A of JIS K 7126. In the measurement of the compressive strength, 5 test pieces of 10 mm square and having a thickness of 4 mm were used in accordance with JIS K 7203. In the measurement of the flexural strength, 5 test pieces having a width of 10 mm, a thickness of 4 mm, and a length of 80 mm were used in accordance with JIS K 7208.

In the measurement of the electric resistance, 5 test pieces of 20 mm square and having 100 ribs in which depth $\times$ diameter is $0.5 \times 1.25$ (mm) are used. In the measurement, as shown in Fig. 7, a current of 1 A was flown between a pair of electrodes 100 and 101 which were placed on the front and rear faces of each of the test pieces TP, the test piece TP and the pair of electrodes 100 and 101 were sandwiched between rubber sheets 102 and 103, a surface pressure of 1 MPa at the maximum was applied, and a voltage applied to the test piece TP was measured by a voltmeter 104. The electric resistance which is measured by the above is the total sum of the contact resistance and the specific resistance. With respect to the specific resistance, the volume resistivity is calculated by the four-probe method, and the remainder is set as the contact resistance.

Table 1 shows measured values (averages of 5 test pieces) under the above-mentioned measurement conditions, and Table 2 shows performance evaluations based on the measured values. In Table 2 showing performance evaluations, ○ indicates satisfaction of requirements in a fuel cell separator, and $\times$ indicates dissatisfaction of the requirements in a fuel cell separator.

Table 1

|  | Gas permeability | Flexural strength | Compressive strength | Contact resistance | Specific resistance |
|---|---|---|---|---|---|
| Example | $5 \times 10^{-8}$ | 50 | 80 | $5 \times 10^{-3}$ | $4.6 \times 10^{-3}$ |
| Comparative Example | $7 \times 10^{-7}$ | 28 | 53 | $6 \times 10^{-2}$ | $1.1 \times 10^{-2}$ |

Table 2

|  | Penetration leakage | Mechanical strength | Electrical conductivity |
|---|---|---|---|
| Example | ○ | ○ | ○ |
| Comparative Example | $\times$ | $\times$ | $\times$ |

Discussion of test results:

As apparent also from Tables 1 and 2 above, in the case of Example corresponding to the invention, all of above-mentioned performances (1) to (3) which are required in a fuel cell separator, i.e., the gas impermeability, the mechanical strength, and the conductivity are superior than those of Comparative Example. It will be seen that Example can contribute to the improved performance and durability of a fuel cell which is configured by using it.

Industrial Applicability

As described above, the invention is a technique wherein, in a fuel cell separator in which a complex that is configured by bonding graphite powder by means of a thermosetting resin is used and ribs for forming gas passages are formed by a resin molding method, a section of the molded member is formed so that flat graphite particles constitute a stack structure in a thickness direction, whereby remarkable improvement can be attained in all of performances which are required in a fuel cell separator, i.e., the gas impermeability, the mechanical strength such as the flexural strength, and the conductivity.

**Claims**

1. A fuel cell separator which consists of a complex that is configured by bonding graphite powder by means of a thermosetting resin, and in which ribs for forming fuel gas passages, oxidant gas passages, or coolant water passages are formed on at least one face by a resin molding method, wherein
   a section of a separator molded member is formed so that plural flat graphite particles constitute a stack structure in a thickness direction.

2. A fuel cell separator according to claim 1, wherein each of said plural flat graphite particles is covered by a resin.

3. A fuel cell separator according to claim 1, wherein part of said flat graphite particles are exposed from top surfaces of said ribs, said part of said flat graphite particles being positioned in said ribs with constituting a stack structure.

4. A fuel cell separator according to claim 1, wherein said complex is set to have composition ratios of 76 to 92 wt. % of graphite powder, and 8 to 24 wt.% of a thermosetting resin.

5. A fuel cell separator according to claim 2, wherein said complex is set to have composition ratios of 76 to 92 wt. % of graphite powder, and 8 to 24 wt.% of a thermosetting resin.

6. A fuel cell separator according to claim 1, wherein an average particle diameter of said graphite powder in said complex is set to a range of 15 to 200 $\mu$m.

7. A fuel cell separator according to claim 2, wherein an average particle diameter of said graphite powder in said complex is set to a range of 15 to 200 $\mu$m.

8. A fuel cell separator according to claim 3, wherein an average particle diameter of said graphite powder in said complex is set to a range of 15 to 200 $\mu$m.

# Fig. 1

## Fig. 2

## Fig. 3

Fig. 4A

```
   ┌─────────────────────┐
   │  STEP OF PRODUCING  │
   │  SEPARATOR          │
   └─────────┬───────────┘
             │
             ▼
   ┌─────────────────────┐        S100
   │ PREPARE PREDETERMINED│
   │ COMPOUND            │
   └─────────┬───────────┘
             │
             ▼
   ┌─────────────────────┐        S101
   │ LOAD COMPOUND       │
   │ INTO MOLD           │
   └─────────┬───────────┘
             │
             ▼
   ┌─────────────────────┐        S102
   │ RESIN-MOLD SEPARATOR│
   │ MOLDED MEMBER       │
   └─────────┬───────────┘
             │
             ▼
   ┌─────────────────────┐
   │  COMPLETION OF      │
   │  SEPARATOR PRODUCT  │
   └─────────────────────┘
```

Fig. 4B

Fig. 5.

14    11a    14    11

14    14    14

4A

Fig. 6

14    11a    14

14    11

Fig. 7

## INTERNATIONAL SEARCH REPORT

| International application No. |
|---|
| PCT/JP00/07363 |

**A. CLASSIFICATION OF SUBJECT MATTER**
Int.Cl$^7$  H01M8/02

According to International Patent Classification (IPC) or to both national classification and IPC

**B. FIELDS SEARCHED**

Minimum documentation searched (classification system followed by classification symbols)
Int.Cl$^7$  H01M8/02

Documentation searched other than minimum documentation to the extent that such documents are included in the fields searched
Jitsuyo Shinan Koho        1926-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | EP 933825 A2 (TOYOTA JIDOSHA KABUSHIKI KAISHA),<br>04 August, 1999 (04.08.99),<br>Claims; column 7, line 40 to column 9, line 11; column<br>9, line 50 to column 10, line 21; Column 13, line 24 to<br>column 14, line 19,<br>& JP 11-204120 A,<br>Claims; page 6, left column, line 13 to right column, line<br>38; page 7, left column, lines 21 to 43; page 8, right<br>column, lines 48 to page 9,<br>left column, line 41 | 1-8<br>2-8 |
| X<br>Y | JP 2000-285931 A (NICHIAS Corporation),<br>13 October, 2000 (13.10.00),<br>page 2, right column, lines 26 to 40; page 4, right column,<br>lines 34 to 44    (Family: none) | 1,4<br>2-3,5-8 |
| X<br>Y | JP 8-180892 A (Toyota Motor Corporation),<br>12 July, 1996 (12.07.96),<br>page 2, left column, line 32 to right column, line 9;<br>page 3, left column, lines 34 to 41; page 5, right column,<br>line 46 to page 6, left column, line 6<br>(Family: none) | 1<br>2-8 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 January, 2001 (16.01.01) | Date of mailing of the international search report<br>30 January, 2001 (30.01.01) |
|---|---|
| Name and mailing address of the ISA/<br>Japanese Patent Office | Authorized officer |
| Facsimile No. | Telephone No. |

Form PCT/ISA/210 (second sheet) (July 1992)

13

## INTERNATIONAL SEARCH REPORT

| International application No. |
|---|
| PCT/JP00/07363 |

C (Continuation). DOCUMENTS CONSIDERED TO BE RELEVANT

| Category* | Citation of document, with indication, where appropriate, of the relevant passages | Relevant to claim No. |
|---|---|---|
| Y | EP 949704 A1 (Nisshinbo Industries, Inc.), 13 October, 1999 (13.10.99), Claims & JP 11-297338 A Claims | 3 |

Form PCT/ISA/210 (continuation of second sheet) (July 1992)